# EUROPÄISCHE PATENTSCHRIFT

(11) **EP 3 321 168 B1**
(45) Veröffentlichungstag und Bekanntmachung des Hinweises auf die Patenterteilung: **08.04.2020**
(21) Anmeldenummer: 17201568.7
(22) Anmeldetag: 14.11.2017
(51) Int. Cl.: B63H 21/21, B63H 23/08

(54) **VORRICHTUNG ZUM VORGEBEN DER FAHRSTUFE EINES ELEKTROANTRIEBES EINES BOOTES**
DEVICE FOR DETERMINING THE DRIVE STAGE OF AN ELECTRICAL DRIVE OF A BOAT
DISPOSITIF DE DÉFINITION D'UNE PLAGE DE VITESSE D'UN ENTRAÎNEMENT ÉLECTRIQUE D'UN BATEAU

(30) Priorität: 14.11.2016 DE 102016121747
(43) Veröffentlichungstag der Anmeldung: 16.05.2018
(73) Patentinhaber: Torqeedo GmbH, 82205 Gilching (DE)
(72) Erfinder: Despineux, Frank, 82234 Weßling (DE)
(74) Vertreter: Nordmeyer, Philipp Werner

(56) Entgegenhaltungen:
- EP-A1- 3 006 327
- EP-A2- 1 808 371
- WO-A1-88/06242
- JP-A- S59 102 692
- JP-A- 2017 013 715
- US-A1- 2003 188 594

## Beschreibung

### Technisches Gebiet

Die vorliegende Erfindung betrifft eine Vorrichtung zum Vorgeben der Fahrstufe eines Elektroantriebes eines Bootes.

### Hintergrund der Erfindung

Es ist bekannt, Boote mit einem Elektromotor anzutreiben. Ferner ist es bekannt, die Fahrstufe des Elektromotors mittels einer Vorrichtung zum Vorgeben der Fahrstufe anzusteuern, wobei das Vorgeben der Fahrstufe beispielsweise durch das Vorgeben der Leistung und/oder des Drehmoments und/oder der Drehzahl des Elektromotors umgesetzt wird. Zur Vorgabe der Fahrstufe durch den Bediener sind prinzipiell zwei unterschiedliche Möglichkeiten bekannt:
Bei einem als Außenbordmotor aufgebauten Bootsantrieb mit einem Elektromotor ist es bekannt, die Fahrstufe des Elektromotors mittels eines Drehgriffs, der am Ende einer direkt am Außenbordmotor angebrachten Pinne vorgesehen ist, vorzugeben. Der Bediener des Außenbordmotors kann dann in an sich bekannter Weise mittels der Pinne sowohl die Fahrtrichtung vorgeben, als auch Fahrstufe des Motors vorgeben.

Weiterhin ist es bekannt, eine Ferngasvorrichtung vorzusehen, bei welcher ein von dem anzusteuernden Bootsantrieb beabstandet angeordneter Fahrthebel vorgesehen ist, mittels welchem dann Fahrstufe des Elektromotors vorgegeben werden kann. Üblicher Weise ist der Ferngashebel an einem Steuerstand des Bootes angeordnet, so dass er von einem Fahrer einfach bedient werden kann, während der Fahrer auch das Steuerrad bedient. Eine Ferngasvorrichtung wird insbesondere dann verwendet, wenn der Motor unzugänglich im Boot eingebaut ist - beispielsweise als Einbaumotor mit Wellenantrieb, als Einbaumotor mit Z-Antrieb, als Einbaumotor mit Saildrive oder als im Wesentlichen außerhalb des Bootes angeordneter Pod-Antrieb. Eine Ferngasvorrichtung kann aber auch zur Ansteuerung eines Außenbormotors verwendet werden. Die Fahrstufe des angesteuerten Elektroantriebs ist dabei meist entsprechend der Stellung des Fahrthebels stufenlos einstellbar.

Zur Ansteuerung eines Bootsantriebs können auch mehrere Ferngasvorrichtungen vorgesehen sein, die in unterschiedlichen Positionen am Boot angeordnet sind - beispielsweise an zwei unterschiedlichen Steuerständen oder an der Pinne und an einem Steuerstand.

In der Regel weisen solche Vorrichtungen einen starr mit dem Boot verbundenen Grundkörper und einen von Hand betätigbaren Fahrthebel auf, der schwenkbar an dem Grundkörper angelenkt ist. Bei der Verschwenkbewegung um die Schwenkachse wirkt der Fahrthebel auf einen Fahrtgeber - beispielsweise in Form eines Sensors - mittels welchem die Leistungselektronik des Elektromotors angesteuert werden kann. Durch die Positionierung des Fahrthebels kann entsprechend die Fahrstufe, bei welcher der Elektroantrieb betrieben werden soll, vom Bediener vorgeben werden. In einer Nullstellung des Fahrthebels steht der Elektroantrieb still. Durch eine Betätigung des Fahrthebels von Hand aus der Nullstellung hinaus wird der Elektroantrieb mit einer entsprechend der Position des Fahrthebels vorgegebenen Fahrstufe betrieben.

Der Fahrthebel kann in einem Bereich bewegt und positioniert werden, der von der Nullstellung und einer Maximalstellung, in welcher der Elektroantrieb in seiner maximalen Fahrstufe betrieben wird, begrenzt ist. Bei einem korrekt ausgelegten System und insbesondere einem richtig angepassten Propeller entspricht die maximale Fahrstufe auch der Nennleistung des Elektroantriebs. Die Nennleistung des Elektroantriebs, auch Dauer-Nennleistung genannt, ist dabei ist die höchste Leistung, die bei einem bestimmungsgemäßen Betrieb ohne zeitliche Einschränkung erbracht werden kann, ohne die Lebensdauer und die Sicherheit des Elektroantriebs, der Leistungselektronik und der Batteriebank zu beeinträchtigen. Der vorgenannte Bereich zwischen Nullstellung und Maximalstellung ist in der Regel zum Antreiben des Elektroantriebes im Vorwärtsbetrieb vorgesehen.

Zudem weisen solche Vorrichtungen in der Regel eine Rückwärtsstellung des Fahrthebels zum Vorgegeben eines Rückwärtslaufs des Elektroantriebs auf. Die Rückwärtsstellung ist dabei durch ein Bewegen des Fahrthebels aus der Nullstellung in die dem vorgenannten Vorwärtsbetriebsbereich entgegengesetzte Richtung einstellbar. Die Antriebseinheit, in der Regel ein Propeller, des Elektroantriebs erzeugt entsprechend der Stellung des Fahrthebels einen Schub, welcher in entgegengesetzte Richtung des bei Vorwärtsfahrt erzeugten Schubs wirkt.

Es ist ferner bekannt, dass Elektroantriebe temporär oberhalb ihrer Nennleistung betrieben werden können, ohne dass es zu Schäden kommt, welche beispielsweise durch ein Überhitzen des Elektroantriebs oder einer Batteriebank des Elektroantriebs verursacht werden können. Durch die Begrenzung der Leistungssteuerung des Elektroantriebs des Bootes auf seine Nennleistung sind damit die maximal durch diesen bereitstellbaren Beschleunigungswerte beziehungsweise der maximal kurzfristig bereitstellbare Schub auf die bei Nennleistung abrufbaren Werte begrenzt, so dass das Leistungsvermögen des Elektroantriebes des Bootes nicht für alle Situationen optimal ausgenutzt werden kann.
Die EP 3 006 327 A1 zeigt ein Steuersystem für ein Schiff mit einem von Hand betätigbaren Fahrthebel.

### Darstellung der Erfindung

Ausgehend von dem bekannten Stand der Technik ist es eine Aufgabe der vorliegenden Erfindung, eine verbesserte Vorrichtung zum Vorgeben der Leistung eines Elektroantriebes eines Bootes bereitzustellen.

Die Aufgabe wird durch eine Vorrichtung zum Vorgeben der Fahrstufe eines Elektroantriebes eines Bootes mit den Merkmalen des Anspruchs 1 gelöst. Vorteilhafte Weiterbildungen ergeben sich aus den Unteransprüchen, den Figuren und der vorliegenden Beschreibung.

Entsprechend wird eine Vorrichtung zum Vorgeben der Fahrstufe eines Elektroantriebes eines Bootes vorgeschlagen, welche einen von Hand betätigbaren Fahrthebel, der zwischen einer Nullstellung, in welcher der Elektroantrieb stillsteht, und einer Maximalstellung, in welcher der Elektroantrieb in seiner Maximalfahrstufe betrieben wird, positioniert werden kann, umfasst. Erfindungsgemäß ist eine von Hand betätigbare Überlastschaltvorrichtung vorgesehen, bei deren Betätigung der Elektroantrieb in einem Überlastbetrieb betrieben wird.

Dadurch, dass eine von Hand betätigbare Überlastschaltvorrichtung vorgesehen ist, bei deren Betätigung der Elektroantrieb in einem Überlastbetrieb betrieben wird, kann der Elektroantrieb durch die Schaltung per Hand im Vergleich zum Betrieb mit der Maximalfahrstufe einen auf das Boot wirkenden erhöhten Schub beziehungsweise eine stärkere Beschleunigung bereitstellen. Folglich kann dadurch das Leistungsvermögen des Elektroantriebs optimal ausgenutzt werden.

Die Fahrstufe kann über eine mittels des Fahrthebels vorgegebene Drehzahlvorgabe realisiert sein, so dass bei Erreichen der vorgegebenen Maximaldrehzahl in der Maximalfahrstufe auch die Nennleistung des Elektromotors abgerufen wird.

Wird hingegen durch eine nicht optimale Auslegung des Antriebssystems - beispielsweise durch einen Propeller mit zu hoher Steigung - ein systembedingt vorgegebenes Maximaldrehmoment des Elektromotors erreicht, bevor die mittels des Fahrthebels vorgegebene Maximaldrehzahl erreicht ist, wird die Nennleistung in der durch den Fahrthebel vorgegebenen Maximalfahrstellung nicht erreicht. In einem solchen Fall wird die Fahrstufe dann durch das systembedingt vorgegebene Maximaldrehmoment vorgegeben. Ein Maximaldrehmoment des Elektromotors wird im System üblicherweise vorgegeben, um eine thermische Überlastung des Motors und damit Schäden am Motor zu verhindern.

Die Fahrstufe kann auch über eine mittels des Fahrthebels vorgegebene Leistungsvorgabe oder Drehmomentvorgabe realisiert sein.

Durch die Schaltung der Überlastschaltvorrichtung kann mindestens eine der in der Maximalfahrstufe vorliegenden Begrenzungen aufgehoben oder verschoben werden. Beispielsweise kann eine gegenüber der vorgegebenen Maximaldrehzahl erhöhte Drehzahl und/oder ein gegenüber dem vorgegebenen Maximaldrehmoment erhöhtes Drehmoment und/oder eine gegenüber der Nennleistung erhöhte Leistung durch das Schalten der Überlastschaltvorrichtung aufgehoben oder verschoben werden.

Durch die vorgeschlagene Vorrichtung kann der Elektroantrieb mithin mit verbesserten beziehungsweise erhöhten Leistungsdaten betrieben werden. Dadurch wird zum einen eine sportlichere Fahrweise des Bootes ermöglicht. Zum anderen kann eine erhöhte Sicherheit erzielt werden, da in Situationen, bei welchen eine erhöhte Motorleistung vorteilhaft oder gar notwendig ist, beispielsweise bei Ausweichmanövern, bei einem Notstopp, bei erhöhtem Wellengang sowie starkem Wind und/oder starker Strömung oder zum Passieren von Gefahrenstellen, durch Betätigen der Überlastschaltvorrichtung zusätzlicher Schub zur Verfügung gestellt werden kann.

Der Elektroantrieb ist im Überlastbetrieb mit einer Drehzahl und/oder einem Drehmoment und/oder einer Leistung von 101 % bis 150 %, bevorzugt 120 % bis 140%, besonders bevorzugt 125% bis 130% einer in der Maximalfahrstufe vorgegebenen Maximaldrehzahl und/oder einem vorgegebenen Maximaldrehmoment und/oder einer Nennleistung betreibbar.

Bei dem von Hand betätigbaren Fahrthebel kann es sich sowohl um einen Ferngashebel, der vom Elektroantrieb beabstandet ist, als auch um einen Fahrthebel an einer Pinne eines Außenbordmotors handeln.

In einer bevorzugten Ausführungsform weist die Vorrichtung ferner eine Rückwärtsstellung des Fahrthebels zum Vorgegeben eines Rückwärtslaufs des Elektroantriebs auf. Die Rückwärtsstellung ist dabei durch ein Bewegen des Fahrthebels aus der Nullstellung in die dem vorgenannten Vorwärtsbetriebsbereich entgegengesetzte Richtung einstellbar. Bevorzugt ist der Elektroantrieb durch ein Betätigen der Überlastschaltvorrichtung von Hand auch in der Rückwärtsstellung in einem Überlastbetrieb betreibbar. Auf diese Weise können insbesondere bei einem Notstopp die in der Maximalfahrstufe vorgegebenen Begrenzungen überwunden werden und eine erhöhte Leistung des Motors abgerufen werden, um das Boot in einer kürzeren Strecke zum Stillstand zu bringen.

Weiterhin ist es vorgesehen, dass der Fahrthebel in einer bevorzugten weiteren Ausführungsform eine Arretierung zum Arretieren des Fahrthebels in einer bestimmten Position, bevorzugt in der Nullstellung, aufweist. Dadurch ist sichergestellt, dass der Fahrthebel nicht versehentlich aus der arretierten Position, bevorzugt der Nullstellung, bewegt wird.

In einer weiteren bevorzugten Ausführungsform ist die Überlastschaltvorrichtung durch eine Bewegung des Fahrthebels über die Maximalstellung hinaus in eine Überlaststellung bereitgestellt. Hierdurch kann die Vorrichtung einen besonders einfachen Aufbau aufweisen, da keine zusätzlichen Stelleinrichtungen zum Einstellen des Überlastbetriebs notwendig sind. Ferner ist die Bedienung der Vorrichtung besonders ergonomisch und einfach gestaltet. Eine die Vorrichtung bedienende Person muss lediglich den Fahrthebel, den sie ohnehin zum Vorgeben der gewünschten Fahrstufe des Elektroantriebs nutzt, über die Maximalstellung hinaus bewegen, ohne dass zusätzliche Handgriffe beziehungsweise Bedienungsschritte notwendig sind. Die die Vorrichtung bedienende Person muss sich so nicht übermäßig auf die Bedienung der Vorrichtung konzentrieren, sondern kann sich im Wesentlichen auf die Steuerung des Bootes fokussieren, so dass auch bei einem Überlastbetrieb mit erhöhtem Schub ein sicheres und aufmerksames Führen des Bootes ermöglicht ist.

In einer weiteren bevorzugten Ausführungsform weist der Fahrthebel in der Maximalstellung einen ersten Anschlag auf, wobei der Fahrthebel über die Maximalstellung hinaus entgegen einer Vorspannung in die Überlaststellung bewegbar ist. Dadurch, dass der Fahrthebel in der Maximalstellung einen ersten Anschlag aufweist, wird eine sichere Positionierung des Fahrthebels erzielt. Mit anderen Worten so ist sichergestellt, dass der Fahrthebel im normalen beziehungsweise im Dauerbetrieb nicht unbeabsichtigt über die Maximalstellung hinaus bewegt wird. Durch den Anschlag ist die Bewegung des Fahrthebels begrenzt. Bewegt die die Vorrichtung bedienende Person den Fahrthebel in die Maximalstellung, kommt es zum Anschlagen des Fahrthebels an den Anschlag, die Bewegung des Fahrthebels ist mithin zunächst begrenzt. Der die Vorrichtung bedienenden Person wird dadurch zudem haptisch und optisch signalisiert, dass die Maximalstellung erreicht ist.

Um den Überlastbetrieb des Elektroantriebs vorzugeben, hat die die Vorrichtung bedienende Person den Fahrthebel von Hand dann entgegen der Vorspannung in die Überlaststellung zu bewegen. Aufgrund der Vorspannung ist hierfür ein zumindest leicht erhöhter Kraftaufwand erforderlich, als er zur Positionierung des Fahrthebels bis zur Maximalstellung notwendig ist. Dadurch ist sichergestellt, dass die die Vorrichtung bedienende Person nicht unbewusst den Überlastbetrieb einstellt.

Der Fahrthebel muss zum Aufrechterhalten des Überlastbetriebs ferner durch die die Vorrichtung bedienende Person permanent gegen die Vorspannung in der Überlaststellung gehalten werden. Lässt die die Vorrichtung bedienende Person den Fahrthebel wieder los oder reduziert sie die auf den Fahrthebel von Hand aufgebrachte Kraft, so wird der Fahrthebel aufgrund der Vorspannung zurück in die Maximalstellung bewegt, so dass der Elektroantrieb wieder im Nennbetrieb betrieben wird.

Um die Vorspannung exakt und dauerhaft bereitzustellen und um einen einfachen und robusten Aufbau der Vorrichtung zu erzielen, ist der Fahrthebel mittels eines Federelements und/oder eines Elastomerelements und/oder eines Hydraulikdruckelements und/oder eines Pneumatikdruckelements aus der Überlaststellung in die Maximalstellung vorgespannt.

In einer weiteren bevorzugten Ausführungsform weist die Überlastschaltvorrichtung einen von Hand betätigbaren separaten Schalter oder Taster zum Einstellen des Überlastbetriebs auf. Dadurch kann ein besonders einfaches Einschalten des Überlastbetriebs erzielt werden. Die die Vorrichtung bedienende Person hat hierzu lediglich den Schalter oder Taster zu betätigen. Weiterhin kann so verhindert werden, dass die die Vorrichtung bedienende Person, insbesondere bei rauem Seegang, bei welchem die Person den Fahrthebel zumindest temporär auch zum Zwecke des Gleichgewichtshaltens nutzt und beim Festhalten eventuell ungewollte ruckartige Bewegungen auf den Fahrthebel überträgt, versehentlich in den Überlastbetrieb schaltet.

In einer weiteren bevorzugten Ausführungsform kann zum Einstellen des Überlastbetriebs sowohl der separate Schalter als auch das Bewegen des Fahrthebels über die Maximalstellung hinaus in die Überlaststellung vorgesehen sein. So kann die die Vorrichtung bedienende Person frei entscheiden, in welcher Weise sie den Überlastbetrieb zuschaltet. In einer bevorzugten Weiterführung kann der separate Schalter dazu verwendet werden, die Überlastbetriebsfunktion generell zu ermöglichen beziehungsweise zu verhindern. Mit anderen Worten kann eine Schaltstellung des Schalters dann dazu vorgesehen sein, dass ein Einstellen des Überlastbetriebs permanent verhindert ist, so dass auch bei einer Bewegung des Fahrthebels in die Überlaststellung der Elektromotor nicht in den Überlastbetrieb geschaltet wird. Befindet sich der Schalter in einer anderen Schaltstellung, ist das Einstellen des Überlastbetriebs durch ein Bewegen des Fahrthebels in die Überlaststellung generell ermöglicht. Der separate Schalter wirkt mithin als vorgelagerter Ein- und Ausschalter des Überlastbetriebs.

Um einen besonders einfachen Aufbau der Vorrichtung sowie eine besonders große Ergonomie für die die Vorrichtung bedienende Person bereitzustellen, ist in einer weiteren bevorzugten Ausführungsform der separate Schalter in einer baulichen Einheit mit dem Fahrthebel bereitgestellt. Bevorzugt ist der separate Schalter dabei derart an dem Fahrthebel angeordnet, dass die die Vorrichtung bedienende Person den separaten Schalter bedienen kann, ohne die Hand von dem Fahrthebel zu lösen und/oder seine Handhaltung an dem Fahrthebel wesentlich zu verändern.

In einer weiteren bevorzugten Ausführungsform weist die Überlastschaltvorrichtung eine Begrenzungseinheit zum zeitlichen Begrenzen des Überlastbetriebs des Elektroantriebs auf. Dadurch kann sichergestellt werden, dass der Elektroantrieb nur so lange im Überlastbetrieb betrieben wird, wie es gefahrlos möglich ist. Mit anderen Worten ist durch die zeitliche Begrenzung des Überlastbetriebs sichergestellt, dass der Elektroantrieb, die Leistungselektronik und die Batteriebank durch den Überlastbetrieb keine Schäden davonträgt. Bevorzugt ist die Begrenzungseinheit in elektronischer Form bereitgestellt. Alternativ kann sie auch zumindest teilweise in mechanischer Form, beispielsweise in Form einer Zeitschaltuhr, ausgeführt sein.

Entsprechend kann die die Begrenzungseinheit in einer weiteren bevorzugten Ausführungsform derart ausgebildet sein, dass sie nach einer vorgegebenen Schaltzeit und/oder anhand zumindest eines Betriebsparameters, bevorzugt eines Temperaturwerts, des Elektronantriebs und/oder einer Batteriebank des Elektroantriebs von dem Überlastbetrieb in die Maximalfahrstufe zurück schaltet. So kann besonders sicher verhindert werden, dass es an dem Elektroantrieb durch den Überlastbetrieb zu Schäden, beispielsweise aufgrund einer Überhitzung, kommt.

Bevorzugt ist zumindest ein Sensor an dem Elektroantrieb vorgesehen, welcher zumindest einen Betriebsparameter ermittelt. Ein besonders sicherer Betrieb kann dabei erzielt werden, wenn eine Mehrzahl an Sensoren an verschiedenen Stellen beziehungsweise Komponenten des Elektroantriebs, beispielsweise im Bereich eines Stators, eines Rotors, einer Steuerungsbeziehungsweise Regelungskonsole oder -platine und/oder der Batteriebank, vorgesehen ist.

In einer weiteren bevorzugten Ausführungsform ist ferner eine Sperreinheit zum temporären Sperren des Überlastbetriebs vorgesehen. Dadurch kann verhindert werden, dass der Elektroantrieb, nachdem die Begrenzungseinheit diesen aus dem Überlastbetrieb zurück in die Maximalfahrstufe geschaltet hat, sogleich erneut in den Überlastbetrieb geschaltet werden kann, was zu einem Überhitzen des Elektroantriebs beziehungsweise von dessen Komponenten führen könnte. Die Sperreinheit ist dabei bevorzugt in die Begrenzungseinheit integriert. Alternativ kann sie auch separat dazu vorgesehen sein.

Bevorzugt ist die Sperreinheit derart ausgebildet, dass sie für eine vorgegebene Sperrzeit und/oder anhand des zumindest einen Betriebsparameters, bevorzugt eines Temperaturwerts des Elektroantriebs und/oder der Batteriebank des Elektroantriebs, das erneute Einschalten des Überlastbetriebs sperrt.

Bevorzugt wird das Wiedereinschalten des Überlastbetriebs zumindest so lange gesperrt, bis sich alle Parameter wieder unterhalb eines vorgegebenen Schwellwerts befinden.

In einer weiteren bevorzugten Ausführungsform ist an dem Fahrthebel ein Trim-Tilt-Schalter zum Einstellen der Position des Elektroantriebs relativ zu einer horizontalen Schwenkachse des Elektroantriebs angeordnet. Dadurch kann die Position des Elektroantriebs entsprechend der Lage des Bootes im Wasser angepasst werden, so dass die Antriebseinheit des Elektroantriebs, bevorzugt ein Propreller, beziehungsweise dessen Rotationsachse im Wesentlichen waagrecht im Wasser positioniert ist. Der durch die Antriebseinheit des Elektroantriebs erzeugte Schub trägt dann im Wesentlichen vollständig zur Beschleunigung der Bootes in Fahrtrichtung bei. Fernerhin kann durch den Trim-Tilt-Schalter der Elektroantrieb, bevorzugt bei Nichtbenutzung beziehungsweise Stillstand des Bootes, aus dem Wasser heraus gehoben werden.

Um einen besonders einfachen und robusten Aufbau der Vorrichtung zu erzielen und eine gute Bedienbarkeit bereitzustellen, kann der Trim-Tilt-Schalter in Form einer Folientastatur oder eines Wippschalters ausgebildet sein.

In einer weiteren bevorzugten Ausführungsform ist der Fahrthebel in einer Fahrtregelungseinheit zusammen mit einer graphischen Anzeigeeinheit zum graphischen Darstellen von Informationen vorgesehen. Dadurch kann ein kompakter Aufbau bereitgestellt werden. Auf etwaige zusätzliche Einheiten, welche zur Darstellung von Informationen ansonsten im Boot notwendig vorzusehen wären, kann so verzichtet werden. Mittels der graphischen Anzeigeeinheit können insbesondere die Geschwindigkeit des Bootes, der Ladezustand der Batterie sowie die zu erwartende Reichweite des Bootes, die abgerufene Motorleistung, und/oder Fehlermeldungen der Leistungselektronik angezeigt werden.

In einer weiteren bevorzugten Ausführungsform kann die Vorrichtung an dem Elektroantrieb, bevorzugt an einer Steuereinheit wie einer Pinne oder an einem Gashebel, des Elektroantriebs, vorgesehen sein. Dadurch ist ein besonders einfaches Führen des Bootes erzielt.

In einer alternativen bevorzugten Ausführungsform ist die Vorrichtung von dem Elektroantrieb beabstandet vorsehbar, beispielsweise in Form eines Ferngashebels. Insbesondere, wenn eine Steuereinrichtung, beispielsweise ein Steuerrad zum Steuern der Richtung des Bootes beabstandet von dem Elektroantrieb an dem Boot angeordnet ist, kann die Vorrichtung dann in unmittelbarer Nähe der Steuereinrichtung angeordnet sein, so dass sowohl das Steuern, als auch die Fahrtstufenvorgabe an den Elektroantrieb von einer Position auf dem Boot erfolgen kann.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Vorrichtung zum Vorgeben der Fahrstufe eines Elektroantriebes eines Bootes;
- Figur 2: schematisch eine Seitenansicht einer Vorrichtung zum Vorgeben der Fahrstufe eines Elektroantriebes eines Bootes in einer weiteren Ausführungsform;
- Figur 3: schematisch eine Detailansicht der Vorrichtung aus Figur 2;
- Figur 4: schematisch eine weitere Detailansicht der Vorrichtung aus Figur 2; und
- Figur 5: schematisch ein Boot mit einem Elektroantrieb und einer Vorrichtung zum Vorgeben der Fahrstufe des Elektroantriebes.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

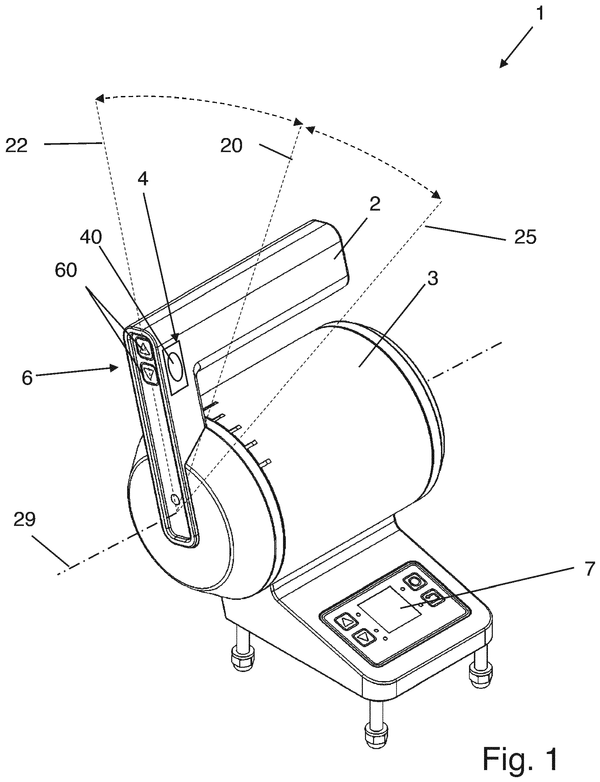

In Figur 1 ist schematisch eine perspektivische Seitenansicht einer Vorrichtung 1 zum Vorgeben der Fahrstufe eines Elektroantriebes 12 eines Bootes 10 gezeigt. Die Vorrichtung 1 umfasst einen fest mit einer nicht gezeigten Bordwand des Bootes 10 verbindbaren Grundkörper 3, an welchem ein von Hand betätigbarer Fahrthebel 2 um eine Schwenkachse 29 schwenkbar angeordnet ist. Bei der Verschwenkbewegung um die Schwenkachse 29 wirkt der Fahrthebel 2 auf einen Fahrtgeber - beispielsweise in Form eines Sensors - mittels welchem die Leistungselektronik des Elektromotors angesteuert werden kann. Durch die Positionierung des Fahrthebels 2 kann entsprechend die Fahrstufe, bei welcher der Elektroantrieb 12 betrieben wird, vorgegeben werden. Die Fahrstufe kann beispielsweise über eine Drehzahlvorgabe, eine Leistungsvorgabe oder eine Drehmomentvorgabe vorgegeben werden.

In einer Nullstellung 20 des Fahrthebels 2 steht der Elektroantrieb still. Durch eine Betätigung des Fahrthebels 2 von Hand aus der Nullstellung 20 hinaus wird der Elektroantrieb 12 mit einer entsprechend der Position des Fahrthebels 2 vorgegebenen Fahrstufe betrieben. Der Fahrthebel 2 kann in einem Bereich bewegt und positioniert werden, der von der Nullstellung 20 einerseits und einer Maximalstellung 22, in welcher der Elektroantrieb 12 mit seiner Maximalfahrstufe im Vorwärtsbetrieb betrieben wird, begrenzt ist. In Figur 1 befindet sich der Fahrthebel 2 in der Maximalstellung 22 und bei einem optimal ausgelegten Antriebssystem wird die durch den Fahrthebel 2 in der Maximalstellung 22 vorgegeben Maximaldrehzahl, Maximalleistung bzw. Nennleistung oder das vorgegebene Maximaldrehmoment erreicht.

Wird hingegen durch eine nicht optimale Auslegung des Antriebssystems - beispielsweise durch einen Propeller mit zu hoher Steigung - ein systembedingt vorgegebenes Maximaldrehmoment des Elektromotors erreicht, bevor eine mittels des Fahrthebels vorgegebene Maximaldrehzahl erreicht ist, wird die Nennleistung in der durch den Fahrthebel vorgegebenen Maximalfahrstufe nicht erreicht. In einem solchen Fall wird die Fahrstufe dann durch das systembedingt vorgegebene Maximaldrehmoment begrenzt. Ein Maximaldrehmoment des Elektromotors wird im System üblicherweise vorgegeben, um eine thermische Überlastung des Motors und damit Schäden am Motor zu verhindern.

Der Fahrthebel 2 kann aus der Nullstellung 20 auch in eine Rückwärtsstellung 25 bewegt werden, welche von der Nullstellung 20 aus gesehen der Maximalstellung 22 entgegengesetzt ist. Der Elektroantrieb 12 erzeugt dann einen dem Vorwärtsbetrieb entgegengesetzten Schub.

Die in Figur 1 gezeigte Vorrichtung 1 weist ferner eine Überlastschaltvorrichtung 4 auf, bei deren Betätigung der Elektroantrieb 12 in einem Überlastbetrieb betrieben wird.

Durch die Schaltung der Überlastschaltvorrichtung 4 kann mindestens eine der in der Maximalfahrstufe vorliegenden Begrenzungen verschoben werden. Beispielsweise kann eine gegenüber der durch die Maximalfahrstufe vorgegebenen Maximaldrehzahl erhöhte Drehzahl und/oder ein gegenüber dem vorgegebenen Maximaldrehmoment erhöhtes Drehmoment und/oder eine gegenüber der Nennleistung erhöhte Leistung durch das Schalten der Überlastschaltvorrichtung 4 vorgegeben werden.

Bevorzugt ist der Elektroantrieb 12 im Überlastbetrieb mit einer Drehzahl, einem Drehmoment oder einer Leistung von 101 % bis 150 %, bevorzugt 120 % bis 140%, besonders bevorzugt 125% bis 130% einer durch die Maximalfahrstufe vorgegebenen Maximaldrehzahl, einem vorgegebenen Maximaldrehmoment oder einer Nennleistung betreibbar.

Der Elektroantrieb 12 kann hierdurch im Vergleich zum Betrieb in der Maximalfahrstufe einen auf das Boot 10 wirkenden erhöhten Schub beziehungsweise eine stärkere Beschleunigung bereitstellen. Um die Überlastschaltvorrichtung 4 zu betätigen, weist diese einen per Hand betätigbaren separaten Schalter 40 auf, der in einer baulichen Einheit mit dem Fahrthebel 2 bereitgestellt ist. Die Überlastvorrichtung 4 kann dabei sowohl im Vorwärtsbetrieb, als auch im Rückwärtsbetrieb betätigt werden.

Die Überlastschaltvorrichtung 4 weist ferner eine nicht gezeigte Begrenzungseinheit in elektronischer Form zum zeitlichen Begrenzen des Überlastbetriebs des Elektroantriebs 12 auf. Die Begrenzungseinheit 5 beziehungsweise die zeitliche Begrenzung des Überlastbetriebs stellt sicher, dass der Elektroantrieb 12 nur so lange im Überlastbetrieb betrieben wird, wie es gefahrlos möglich ist und der Elektroantrieb 12 durch den Überlastbetrieb keine Schäden davonträgt.

In der in Figur 1 gezeigten Ausführungsform schaltet die Begrenzungseinheit den Elektroantrieb 12 nach einer vorgegebenen Schaltzeit von 30 Sekunden von dem Überlastbetrieb in die Maximalfahrstufe zurück. So wird verhindert, dass es an dem Elektroantrieb 12 durch den Überlastbetrieb zu Schäden kommt, beispielsweise aufgrund einer Überhitzung.

Ferner ist eine zusammen mit der Begrenzungseinheit 5 in einer nicht gezeigten Steuerschaltung der Vorrichtung ausgebildete Sperreinheit 50 zum temporären Sperren des Überlastbetriebs vorgesehen. Die Sperreinheit 50 verhindert, dass der Elektroantrieb 12, nachdem die Begrenzungseinheit 5 diesen aus dem Überlastbetrieb zurück in die Maximalfahrstufe geschaltet hat, sogleich erneut in den Überlastbetrieb geschaltet werden kann, was dann zu einem Überhitzen des Elektroantriebs 12 beziehungsweise von dessen Komponenten führen könnte. Vorliegend schaltet die Sperreinheit 50 nach einer vorgegebenen Sperrzeit die Aktivierung des Überlastbetriebs wieder frei. In einer bevorzugten Alternative wird das Schalten in den Überlastbetrieb erst dann wieder freigegeben, wenn bestimmte Parameter oder alle Parameter sich wieder unter einer vorgegebenen Schwelle befinden. Beispielsweise wird ein erneutes Schalten in den Überlastbetrieb erst dann wieder freigegeben, wenn die Temperaturparameter sich wieder unterhalb eines vorgegebenen Werts befinden.

Der Fahrhebel 2 weist weiterhin ein Trim-Tilt-Schalter 6 zum Einstellen der Position des Elektroantriebs 12 beziehungsweise der Antriebsachse des Propellers relativ zu der Ausrichtung des Boots 10 auf. Der Trim-Tilt-Schalter 6 ist in Form einer Folientastatur mit zwei Folientasten 60 seitlich an dem Fahrhebel 2 angeordnet. Dadurch kann die Position des Elektroantriebs 12 entsprechend der Lage des Bootes 10 im Wasser angepasst werden. Eine Antriebseinheit, bevorzugt ein Propreller 16, des Elektroantriebs 12 beziehungsweise deren Rotationsachse kann durch Betätigen der Folientasten 60 des Trim-Tilt-Schalters 6 waagrecht positioniert werden. Der durch die Antriebseinheit des Elektroantriebs 12 erzeugte Schub trägt so im Wesentlichen vollständig zur Beschleunigung der Bootes 10 in Fahrtrichtung bei. Fernerhin kann durch den Trim-Tilt-Schalter 6 der Elektroantrieb 12 bei Nichtbenutzung beziehungsweise Stillstand des Bootes 10 aus dem Wasser heraus gehoben werden, um Bewuchs oder Algenablagerungen zu verringern und/oder um Fahrtwiderstände beim Segeln zu verringern und/oder um bei Anlanden oder Fahren im Flachwasser Grundberührung zu vermeiden.

An dem Grundkörper 3 ist fernerhin eine graphische Anzeigeeinheit 7 zum graphischen Darstellen von Informationen vorgesehen. Mittels der graphischen Anzeigeeinheit 7 können beispielsweise die Geschwindigkeit des Bootes 10, der Ladezustand der Batterie sowie die zu erwartende Reichweite des Bootes, die abgerufene Motorleistung, und Fehlermeldungen der Leistungselektronik angezeigt werden. Der Fahrthebel 2 und die graphische Anzeigeeinheit 7 bilden hierbei zusammen eine Fahrtregelungseinheit aus.

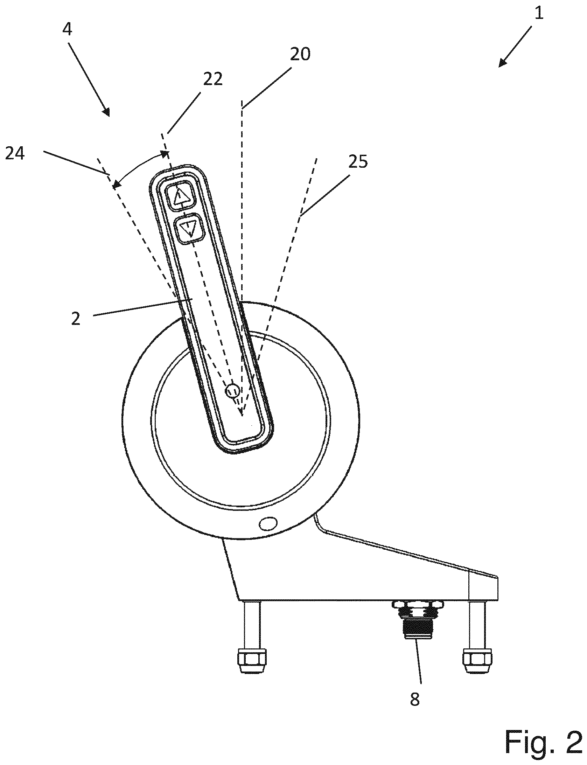

Figur 2 zeigt schematisch eine Seitenansicht einer Vorrichtung 1 zum Vorgeben der Fahrstufe eines Elektroantriebes 12 eines Bootes 10 in einer weiteren Ausführungsform. Die Vorrichtung 1 entspricht in ihrem Aufbau im Wesentlichen jener aus Figur 1. Die Überlastschaltvorrichtung 4 weist bei der in Figur 2 gezeigten Vorrichtung 1 jedoch keinen separaten Schalter auf.

Die Überlastschaltvorrichtung 4 wird hier vielmehr durch eine Bewegung des Fahrthebels 2 über die Maximalstellung 22 hinaus in eine Überlaststellung 24 bereitgestellt. Der Fahrthebel 2 weist in der Maximalstellung 22 einen hier nicht gezeigten ersten Anschlag auf, wobei der Fahrthebel 2 über die Maximalstellung 22 hinaus entgegen einer Vorspannung in die Überlaststellung 24 bewegbar ist. Um den Überlastbetrieb aufrecht zu erhalten, muss der Fahrthebel 2 von Hand gegen die Vorspannkraft in der Überlaststellung 24 gehalten werden. Wird der Fahrthebel 2 losgelassen, stellt er sich aufgrund der Vorspannung automatisch wieder in die Maximalstellung 22 zurück, so dass der Elektroantrieb wieder in der Maximalfahrstufe betrieben wird.

Die Begrenzungseinheit 1 der Vorrichtung aus Figur 2 schaltet anhand des Werts eines Betriebsparameters des Elektroantriebs 12, beispielsweise eines Temperaturwerts des Elektromotors, aus dem Überlastbetrieb wieder zurück in die Maximalfahrstellung. Die Begrenzungseinheit 5 ist hierzu mit einer Mehrzahl an Temperatursensoren verbunden, die an verschiedenen Komponenten des Elektroantriebs 12, vorliegend der Batteriebank, dem Stator und dem Rotor des Elektroantriebs 12, angeordnet sind. Überschreitet einer der durch die Mehrzahl an Sensoren an die Begrenzungseinheit 5 übermittelten Temperaturwerte einen jeweils für die einzelnen Komponenten spezifischen vorgegebenen Grenzwert, so schaltet die Begrenzungseinheit 5 den Überlastbetrieb aus und zurück in die Maximalfahrstellung.

Weiterhin sperrt die in der Überlastschaltvorrichtung 4 vorgesehene Sperreinheit der Vorrichtung aus Figur 2 das Wiedereinschalten des Überlastbetriebs anhand der durch die Mehrzahl an Sensoren bereitgestellten Temperaturwerte. Erst, wenn alle Temperaturwerte jeweils einen für die einzelnen Komponenten vorgegebenen Wert unterschreiten, hebt die Sperreinheit die Sperrung der Möglichkeit des Einschaltens des Überlastbetriebs wieder auf.

Die Vorrichtung 2 weist ferner einen Anschluss 8 auf, mittels welchem die Vorrichtung 1 mit einer Steuerung des Elektroantriebs 12 verbunden werden kann.

Alternativ kann die Überlastschaltvorrichtung 4 auch in der Rückwärtsstellung 25 einen nicht gezeigten weiteren vorgespannten Anschlag aufweisen, wobei durch ein Bewegen des Fahrthebels 2 über die Rückwärtsstellung 25 hinaus in eine nicht gezeigte Rückwärts-Überlaststellung die Überlastschaltvorrichtung 4 entsprechend auch für den Rückwärtsbetrieb betätigbar ist. Dies ist insbesondere beim Einleiten eines Notstopp-Manövers hilfreich.

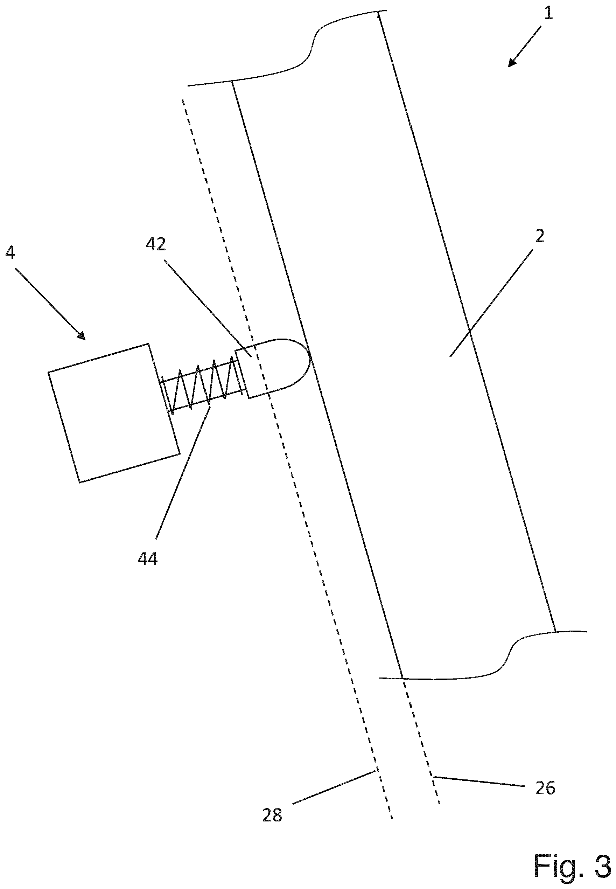

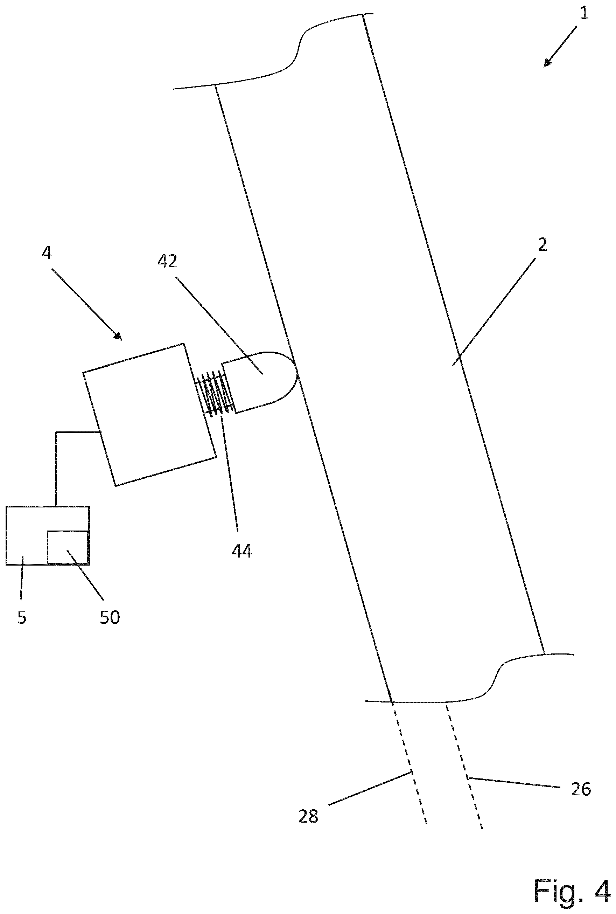

In Figuren 3 und 4 sind schematisch Detailansichten der Vorrichtung aus Figur 2 gezeigt. In Figur 3 befindet sich der Fahrthebel 2 in der Maximalstellung 22 und liegt an einem ersten Anschlag 26 an. Der erste Anschlag 26 ist vorliegend durch ein mittels eines Vorspannelements 44 vorgespanntes Anschlagelement 42 ausgebildet, welche in Wirkverbindung mit der Überlastschaltvorrichtung 4 steht. Das Anschlagelement 42 befindet sich dabei in einem ausgefahrenen Zustand.

In Figur 4 ist befindet sich der Fahrthebel 2 in der Überlaststellung 24 und liegt an einem zweiten Anschlag 28 an. Der zweite Anschlag 28 ist durch das entgegen der Vorspannung in eine eingefahrene Position gedrückte Anschlagelement 42 ausgebildet. Durch das Eindrücken des Anschlagelements 42 wird die Überlastschaltvorrichtung 4 betätigt und der Elektroantrieb in den Überlastbetrieb geschaltet. Der Elektroantrieb 12 wird dabei so lange im Überlastbetrieb betrieben, bis entweder der Fahrthebel 2 wieder aus der Überlaststellung 24 bewegt wird oder die Begrenzungseinheit 5 der Überlastschaltvorrichtung 4 den Überlastbetrieb ausschaltet und in die Maximalfahrstellung schaltet. Dabei ist die Stellung des Fahrthebels 2 in die Überlaststellung 24 nicht von Bedeutung. Mit anderen Worten schaltet die Begrenzungseinheit 5 zurück in die Maximalfahrstellung auch dann, wenn der Fahrthebel 2 noch in der Überlaststellung 24 gehalten ist.

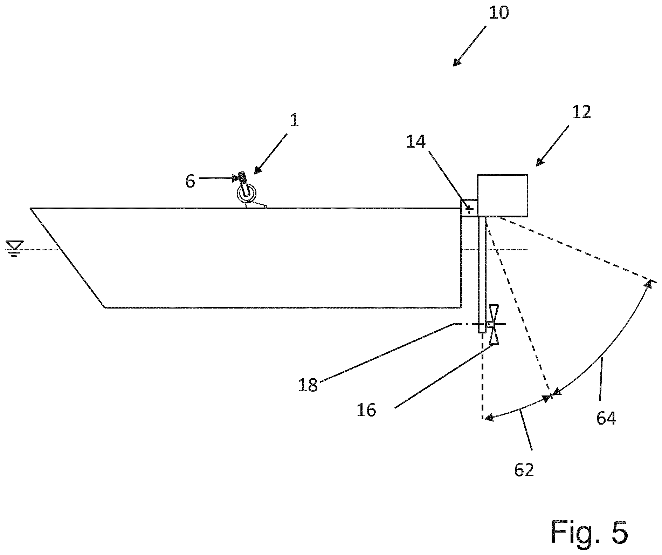

Figur 5 zeigt schematisch ein Boot 10 mit einem Elektroantrieb 12 in Form eines elektrischen Außenbordantriebs und einer von dem Elektroantrieb 12 beabstandet auf dem Boot 10 angeordneten Vorrichtung 1 zum Vorgeben der Fahrstufe des Elektroantriebes 12 entsprechend einer der Ausführungsformen aus den Figuren 1 und 2. Der Elektroantrieb 12 ist über eine horizontale Schwenkachse 14 schwenkbar an dem Boot 10 befestigt. Die Position des Elektroantriebs 12 relativ zu der horizontalen Schwenkachse 14 kann über den Trim-Tilt-Schalter 6 der Vorrichtung 1 eingestellt werden. Entsprechend der Ausrichtung des Bootes relativ zur Horizontalen kann der Elektroantrieb in einem Trim-Bereich 62 während des Betrieb des Elektroantriebs 12 durch betätigen des Trim-Tilt-Schalters 6 geschwenkt werden, so dass ein Propreller 16 des Elektroantriebs 12 beziehungsweise dessen Propellerachse 18 im Wesentlichen waagrecht positioniert ist. Der durch den Propeller 16 erzeugte Schub trägt dann im Wesentlichen vollständig zur Beschleunigung der Bootes 10 in Fahrtrichtung bei.

Ist der Elektroantrieb 12 außer Betrieb beziehungsweise befindet sich der Fahrthebel 2 in der Nullstellung 22, so kann der Elektroantrieb 12 über den Trim-Bereich 62 hinaus in einen Tilt-Bereich 64 geschwenkt werden. Dadurch kann der Elektroantrieb 12 teilweise oder gar komplett aus dem Wasser gehoben beziehungsweise in eine für den Transport des Bootes 10 günstige Position geschwenkt werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Vorrichtung
- 10: Boot
- 12: Elektroantrieb
- 14: horizontale Schwenkachse
- 16: Propeller
- 18: Propellerachse
- 2: Fahrthebel
- 20: Nullstellung
- 22: Maximalstellung
- 24: Überlaststellung
- 25: Rückwärtsstellung
- 26: erster Anschlag
- 28: zweiter Anschlag
- 29: Schwenkachse
- 3: Grundkörper
- 4: Überlastschaltvorrichtung
- 40: separater Schalter
- 42: Anschlagelement
- 44: Vorspannelement
- 5: Begrenzungseinheit
- 50: Sperreinheit
- 6: Trim-Tilt-Schalter
- 60: Folientasten
- 62: Trimm-Bereich
- 64: Tilt-Bereich
- 7: Graphische Anzeigeeinheit
- 8: Anschluss

## Patentansprüche

1. Vorrichtung (1) zum Vorgeben der Fahrstufe eines Elektroantriebes (12) eines Bootes (10), umfassend einen von Hand betätigbaren Fahrthebel (2), der zwischen einer Nullstellung (20), in welcher der Elektroantrieb (12) stillsteht, und einer Maximalstellung (22), in welcher der Elektroantrieb (12) in seiner Maximalfahrstufe betrieben wird, welche der Nennleistung des Elektroantriebs (12) entspricht, positioniert werden kann,
**dadurch gekennzeichnet, dass**
eine von Hand betätigbare Überlastschaltvorrichtung (4) vorgesehen ist, bei deren Betätigung der Elektroantrieb (12) in einem Überlastbetrieb, in welchem der Elektroantrieb (12) mit einer Drehzahl und/oder einem Drehmoment und/oder einer Leistung von 101 % bis 150 % einer in der Maximalfahrstufe vorgegebenen Maximaldrehzahl und/oder einem vorgegebenen Maximaldrehmoment und/oder einer Nennleistung betreibbar ist, betrieben wird.

2. Vorrichtung (1) gemäß Anspruch 1, **dadurch gekennzeichnet, dass** die Überlastschaltvorrichtung (4) durch eine Bewegung des Fahrthebels (2) über die Maximalstellung (22) hinaus in eine Überlaststellung bereitgestellt ist.

3. Vorrichtung (1) gemäß Anspruch 2, **dadurch gekennzeichnet, dass** der Fahrthebel (2) in der Maximalstellung (22) einen ersten Anschlag aufweist, und der Fahrthebel (2) über die Maximalstellung (22) hinaus entgegen einer Vorspannung in die Überlaststellung bewegbar ist.

4. Vorrichtung (1) gemäß Anspruch 2 oder 3, **dadurch gekennzeichnet, dass** der Fahrthebel (2) mittels eines Federelements und/oder eines Hydraulikdruckelements und/oder eines Pneumatikdruckelements aus der Überlaststellung in die Maximalstellung (22) vorgespannt ist.

5. Vorrichtung (1) gemäß einem der vorstehenden Ansprüche, **dadurch gekennzeichnet, dass** die Überlastschaltvorrichtung (4) einen von Hand betätigbaren separaten Schalter (40) zum Einstellen des Überlastbetriebs aufweist.

6. Vorrichtung (1) gemäß Anspruch 5, **dadurch gekennzeichnet, dass** der separate Schalter (40) in einer baulichen Einheit mit dem Fahrthebel (2) bereitgestellt ist.

7. Vorrichtung (1) gemäß einem der vorstehenden Ansprüche, **dadurch gekennzeichnet, dass** die Überlastschaltvorrichtung (4) eine Begrenzungseinheit (5) zum zeitlichen Begrenzen des Überlastbetriebs aufweist.

8. Vorrichtung (1) gemäß Anspruch 7, **dadurch gekennzeichnet, dass** die Begrenzungseinheit (5) derart ausgebildet ist, dass sie nach einer vorgegebenen Schaltzeit (ts) und/oder anhand zumindest eines Betriebsparameters, bevorzugt eines Temperaturwerts, des Elektroantriebs und/oder einer Batteriebank von dem Überlastbetrieb in die Maximalfahrstufe schaltet.

9. Vorrichtung (1) gemäß einem der vorstehenden Ansprüche, **dadurch gekennzeichnet, dass** an dem Fahrthebel (2) ein Trim-Tilt-Schalter (6) zum Einstellen der Position des Elektroantriebs (12) relativ zu einer horizontalen Schwenkachse (14) des Elektroantriebs (12) angeordnet ist.

10. Vorrichtung (1) gemäß Anspruch 9, **dadurch gekennzeichnet, dass** der Trim-Tilt-Schalter (6) in einer baulichen Einheit mit dem Fahrthebel (2) bereitgestellt ist.

11. Vorrichtung (1) gemäß Anspruch 9 oder 10, **dadurch gekennzeichnet, dass** der Trim-Tilt-Schalter (6) in Form einer Folientastatur (60) oder eines Wippschalters ausgebildet ist.

12. Vorrichtung (1) gemäß einem der vorstehenden Ansprüche, **dadurch gekennzeichnet, dass** der Fahrthebel (2) in einer Fahrtregelungseinheit zusammen mit einer graphischen Anzeigeeinheit (7) zum graphischen Darstellen von Informationen vorgesehen ist.

13. Vorrichtung (1) gemäß einem der vorstehenden Ansprüche, **dadurch gekennzeichnet, dass** die Vorrichtung (1) an dem Elektroantrieb (12), bevorzugt an einer Steuereinheit, besonders bevorzugt einer Pinne, des Elektroantriebs (12), vorsehbar ist.

14. Vorrichtung (1) gemäß einem der Ansprüche 1 bis 12, **dadurch gekennzeichnet, dass** die Vorrichtung (1) von dem Elektroantrieb (12) beabstandet vorgesehen ist, bevorzugt als Ferngashebel.

## Claims

1. Device (1) for setting the drive stage of an electrical drive (12) of a boat (10), including a manually actuatable drive lever (2) which can be positioned between a zero position (20), in which the electrical drive (12) is stopped, and a maximum position (22), in which the electrical drive (12) is driven at its maximum drive stage which corresponds to the nominal power of the electrical drive (12),
**characterised in that**
a manually actuatable overload switching device (4) is provided, at the actuation of which the electrical drive (12) is operated in an overload mode in which the electrical drive (12) is actuatable with a rotational speed and/or a torque and/or a power of 101% to 150% of a maximum rotational speed predetermined in the maximum drive stage and/or a predetermined maximum torque and/or a nominal power.

2. Device (1) according to claim 1, **characterised in that** the overload switching device (4) is provided by means of a movement of the drive lever (2) beyond the maximum position (22) into an overload position.

3. Device (1) according to claim 2, **characterised in that** the drive lever (2) in the maximum position (22) has a first stop and the drive lever (2) is movable beyond the maximum position (22) against a preload in the overload position.

4. Device (1) according to claim 2 or 3, **characterised in that** the drive lever (2) is preloaded by means of a spring element and/or a hydraulic pressure element and/or a pneumatic pressure element out of the overload position into the maximum position (22).

5. Device (1) according to any of the preceding claims, **characterised in that** the overload switching device (4) has a manually actuatable separate switch (40) for setting the overload mode.

6. Device (1) according to claim 5, **characterised in that** the separate switch (40) is provided in a construction unit with the driving lever (2).

7. Device (1) according to any of the preceding claims, **characterised in that** the overload switching device (4) has a limiting unit (5) for the temporal limiting of the overload mode.

8. Device (1) according to claim 7, **characterised in that** the limiting unit (5) is configured such that after a predetermined switching time (ts) and/or with reference to at least one operating parameter, preferably a temperature value, of the electrical drive and/or of a battery bank switches from the overload mode into the maximum drive stage.

9. Device (1) according to any of the preceding claims, **characterised in that** a trim-tilt-switch (6) for adjusting the position of the electrical drive (12) is arranged on the drive lever (2) relatively to a horizontal pivot axis (14) of the electrical drive (12).

10. Device (1) according to claim 9, **characterised in that** the trim-tilt-switch (6) is provided in a constructional unit with the drive lever (2).

11. Device (1) according to claim 9, **characterised in that** the trim-tilt-switch (6) is designed in the form of a membrane keyboard (60) or of a rocker switch.

12. Device (1) according to any of the preceding claims, **characterised in that** the drive lever (2) is provided in a drive regulating unit together with a graphic display unit (7) for the graphical representation of information.

13. Device (1) according to any of the preceding claims, **characterised in that** the device (1) can be provided on the electrical drive (12), preferably on a control unit, especially preferably a tiller, of the electrical drive (12).

14. Device (1) according to any of claims 1 to 12, **characterised in that** the device (1) is provided spaced from the electrical drive (12), preferably as a remote throttle lever.

## Revendications

1. Dispositif (1) pour le réglage d'un cran de marche d'un entraînement électrique (12) d'un bateau (10), comprenant un levier de marche (2) pouvant être actionné par la main, qui peut être positionné entre une position neutre (20), dans laquelle l'entraînement électrique (12) est à l'arrêt, et une position maximale (22), dans laquelle l'entraînement électrique (12) fonctionne dans son cran de marche maximal, lequel correspond à la puissance nominale de l'entraînement électrique (12),
**caractérisé en ce que**
un dispositif de commutation de surcharge (4) pouvant être actionné par la main est prévu, à l'actionnement duquel l'entraînement électrique (12) fonctionne dans un mode de surcharge, dans lequel l'entraînement électrique (12) peut fonctionner avec un régime et/ou un couple et/ou une puissance de 101 % à 150% d'un régime maximal prédéfini dans le cran de marche maximal et/ou un couple maximal prédéfini et/ou une puissance nominale.

2. Dispositif (1) selon la revendication 1, **caractérisé en ce que** le dispositif de commutation de surcharge (4) est fourni par un déplacement du levier de marche (2) au-delà de la position maximale (22) dans une position de surcharge.

3. Dispositif (1) selon la revendication 2, **caractérisé en ce que** le levier de marche (2) présente dans la position maximale (22) une première butée, et le levier de marche (2) peut être déplacé au-delà de la position maximale (22) à l'encontre d'une précontrainte dans la position de surcharge.

4. Dispositif (1) selon la revendication 2 ou 3, **caractérisé en ce que** le levier de marche (2) est précontraint de la position de surcharge dans la position maximale (22) au moyen d'un élément ressort et/ou d'un élément hydraulique et/ou d'un élément de pression pneumatique.

5. Dispositif (1) selon l'une quelconque des revendications précédentes, **caractérisé en ce que** le dispositif de commutation de surcharge (4) présente un commutateur (40) séparé pouvant être actionné par la main pour le réglage du mode de surcharge.

6. Dispositif (1) selon la revendication 5, **caractérisé en ce que** le commutateur (40) séparé est fourni dans une unité structurale avec le levier de marche (2).

7. Dispositif (1) selon l'une quelconque des revendications précédentes, **caractérisé en ce que** le dispositif de commutation de surcharge (4) présente une unité de limitation (5) pour la limitation dans le temps du mode de surcharge.

8. Dispositif (1) selon la revendication 7, **caractérisé en ce que** l'unité de limitation (5) est réalisée de telle sorte qu'elle effectue une commutation du mode de surcharge dans le cran de marche maximal après un temps de commutation (ts) prédéfini et/ou sur la base d'au moins un paramètre de fonctionnement, de préférence d'une valeur de température, de l'entraînement électrique et/ou d'un banc de batterie.

9. Dispositif (1) selon l'une quelconque des revendications précédentes, **caractérisé en ce qu'**un commutateur d'ajustement et d'inclinaison (6) pour le réglage de la position de l'entraînement électrique (12) par rapport à un axe de pivotement horizontal (14) de l'entraînement électrique (12) est disposé sur le levier de marche (2).

10. Dispositif (1) selon la revendication 9, **caractérisé en ce que** le commutateur d'ajustement et d'inclinaison (6) est fourni dans une unité structurale avec le levier de marche (2).

11. Dispositif (1) selon la revendication 9 ou 10, **caractérisé en ce que** le commutateur d'ajustement et d'inclinaison (6) est réalisé sous forme d'un clavier à membrane (60) ou d'un commutateur à bascule.

12. Dispositif (1) selon l'une quelconque des revendications précédentes, **caractérisé en ce que** le levier de marche (2) est prévu dans une unité de régulation de marche conjointement avec une unité d'affichage graphique (7) pour la représentation graphique d'informations.

13. Dispositif (1) selon l'une quelconque des revendications précédentes, **caractérisé en ce que** le dispositif (1) peut être prévu sur l'entraînement électrique (12), de préférence sur une unité de commande, de manière particulièrement préférée une gouvernail, de l'entraînement électrique (12).

14. Dispositif (1) selon l'une quelconque des revendications 1 à 12, **caractérisé en ce que** le dispositif (1) est prévu à distance de l'entraînement électrique (12), de préférence en tant que levier de commande à distance.
